# EUROPEAN PATENT SPECIFICATION

(11) **EP 3 499 930 B1**
(45) Date of publication and mention of the grant of the patent: **24.11.2021**
(21) Application number: 17838706.4
(22) Date of filing: 08.08.2017
(51) Int. Cl.: H04W 68/00, H04W 74/00

(54) **PAGING METHOD AND APPARATUS**
FUNKRUFVERFAHREN UND -VORRICHTUNG
PROCÉDÉ ET APPAREIL DE RADIOMESSAGERIE

(30) Priority: 10.08.2016 CN 201610651625; 28.09.2016 CN 201610861921
(43) Date of publication of application: 19.06.2019
(60) Divisional application: 21202958.1
(73) Proprietor: ZTE Corporation, Shenzhen, Guangdong 518057 (CN)
(72) Inventor: LIU, Xu, Shenzhen Guangdong 518057 (CN); DAI, Bo, Shenzhen Guangdong 518057 (CN); SHA, Xiubin, Shenzhen Guangdong 518057 (CN)
(74) Representative: Iannone, Carlo Luigi
(86) International application number: PCT/CN2017/096466
(87) International publication number: WO 2018/028576

(56) References cited:
- WO-A1-2010/114447
- CN-A- 102 291 845
- CN-A- 102 612 119
- CN-A- 102 907 152
- US-A1- 2013 051 214
- ZTE: "New WI proposal on further enhancement of cellular IoT for LTE", 3GPP DRAFT; RP-161175 NEW WI PROPOSAL ON FURTHER ENHANCEMENT OF IOT FOR LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. TSG RAN, no. Busan, Korea; 20160613 - 20160616 13 June 2016 (2016-06-13), XP051660489, Retrieved from the Internet: URL:http://www.3gpp.org/ftp/tsg%5Fran/TSG% 5FRAN/TSGR%5F72/Docs/RP%2D161175%2Ezip [retrieved on 2016-06-13]
- INTEL CORPORATION: "Remaining details of NB-IoT multi-carrier operation", 3GPP DRAFT; R1-161893 - INTEL MCO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sophia Antipolis, FRANCE; 20160322 - 20160324 16 March 2016 (2016-03-16), XP051081010, Retrieved from the Internet: URL:http://www.3gpp.org/ftp/tsg_ran/WG1_RL 1/TSGR1_AH/LTE_NB-IoT_1603/Docs/ [retrieved on 2016-03-16]
- NOKIA ET AL: "Non-anchor carrier enhancements", 3GPP DRAFT; R1-166592, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 21 August 2016 (2016-08-21), XP051125463, Retrieved from the Internet: URL:http://www.3gpp.org/ftp/Meetings_3GPP_ SYNC/RAN1/Docs/ [retrieved on 2016-08-21]
- ZTE: "Consideration for PRACH on multi-carrier in NB-IoT", 3GPP DRAFT; R2-164859 CONSIDERATION FOR PRACH ON MULTI-CARRIER IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Gothenburg, Sweden; 20160822 - 20160826 21 August 2016 (2016-08-21), XP051126554, Retrieved from the Internet: URL:http://www.3gpp.org/ftp/Meetings_3GPP_ SYNC/RAN2/Docs/ [retrieved on 2016-08-21]

## Description

### TECHNICAL FIELD

The present disclosure relates to the field of communication, and more particularly to a paging method and a paging apparatus.

### BACKGROUND

In future mobile network applications, the demand for traffic, the number of terminals, and the types of terminals will all show an increasing trend. As one of the important scenes and technical means of 5G, Machine Type Communication (MTC) is receiving more and more attention. In the MTC topic, for the characteristics of low-cost low-throughput type terminals, a sub-topic of Narrowband-Internet of Things (NB-IoT) is proposed: providing low-throughput wireless communication service for NB-IoT low-cost terminals using the 200kHZ band.

In view of this, the concept of multi-carrier (Multi-Carrier) cell is proposed in the 3GPP R13 phase. That is, a cell consists of multiple frequency points, and each frequency point/carrier occupies a narrow band of 200 khz, but only one frequency point carries a NarrowBand-Primary Synchronization Signal/Secondary Synchronization Signal (NB-PSS/SSS), a Narrowband-Physical Broadcast Channel (NB-PBCH), and a System Information Block (SIB). Such frequency is called as an Anchor-Carrier carrier or an Anchor-Physical Resource Block (Anchor-PRB).Other frequency points are called Non Anchor-Carriers or Non Anchor-PRBs (Non Anchor-Physical Resource Blocks). These non-anchor carriers do not carry NB-PSS/SSS, NB-PBCH, and SIB, and only carry data service-related channels, such as NarrowBand-Physical Downlink Control Channel (NB-PDCCH), NarrowBand-Physical Downlink Shared Channel (NB-PUSCH) and NarrowBand-Physical Uplink Shared Channel (NB-PUSCH). In this way, the overhead of the common channel can be saved, and the number of inter-frequency cells can be reduced. US2013051214 A1 introduces a system and method for radio link failure recovery. A 3GPP technical literature XP051660489 introduces about problems about the Paging and Random Access procedure which existed in the NB-IoT. A 3GPP technical literature XP051081010 introduces about random access procedure for NB-IoT multi-carrier operation.

However, for such a cell structure, paging is only carried on the Anchor-Carrier, which results in greatly limited capacity of the paging, and the carrier load of frequency points is not balanced.

### SUMMARY

The technical problem to be solved by the present invention is to provide a paging method and a paging apparatus, which are intended to solve the problem in the related art that a non-anchor carrier in a multi-carrier cell cannot receive a paging message, the paging capacity is limited, and the load is imbalance. The invention is defined by the attached claims.

In the paging method and paging apparatus, a paging message from a base station is received on a first non-anchor carrier of a multi-carrier cell, and according to downlink data arrival indication information and/or system message change indication information carried in the paging message, a random access is initiated and/or a changed system message is received according to the paging message. In this way, when the user equipment is paged by the base station, the non-anchor carrier resources in the multi-carrier cell can be fully utilized to receive the paging message, which can greatly expand the paging capacity and make the paging load more balanced.

### BRIEF DESCRIPTION OF THE DRAWINGS

FIG. 1 is a flowchart of a paging method according to an embodiment of the present disclosure;
FIG. 2 is another flowchart of a paging method according to an embodiment of the present disclosure;
FIG. 3 is still another flowchart of a paging method according to an embodiment of the present disclosure;
FIG. 4 is a schematic diagram of behavior determination of a UE after paging monitoring has been performed on a Non Anchor carrier and an associated paging message is received according to the embodiment of the present disclosure;
FIG. 5 is a schematic diagram of behavior determination of a UE when the paging monitoring has been completed on a Non Anchor carrier and the related paging message is not received according to the embodiment of the present disclosure; and
FIG. 6 is a schematic structural diagram of a paging apparatus according to an embodiment of the present disclosure.

### DETAILED DESCRIPTION

The present disclosure will be described in detail below with reference to the accompanying drawings. It is understood that the specific embodiments described herein are merely illustrative of the disclosure and are not intended to be limiting.

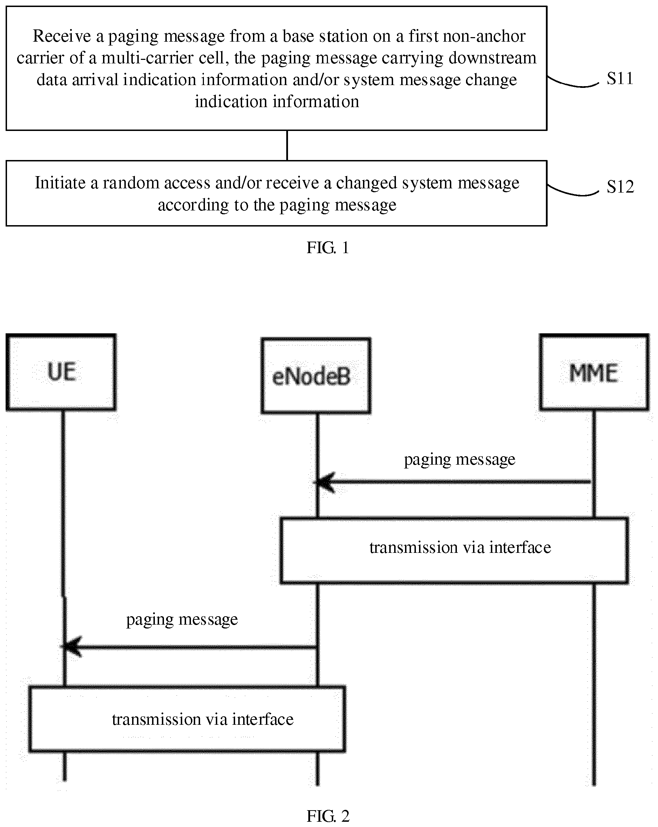

As shown in FIG. 1, an embodiment of the present disclosure provides a paging method, including the following steps.

In S11, a paging message from a base station is received on a first non-anchor carrier of a multi-carrier cell. The paging message carries downlink data arrival indication information and/or system message change indication information.

In S12, a random access is initiated and/or a changed system message is received according to the paging message.

The multi-carrier cell includes an anchor carrier and a plurality of non-anchor carriers.

In the paging method provided by the embodiment of the present disclosure, a paging message from a base station is received on a first non-anchor carrier of a multi-carrier cell, and according to downstream data arrival indication information and/or system message change indication information carried in the paging message, a random access is initiated and/or a changed system message is received according to the paging message. In this way, when the user equipment is paged by the base station, the non-anchor carrier resources in the multi-carrier cell can be fully utilized to receive the paging message, which can greatly expand the paging capacity and make the paging load more balanced.

When the paging message received in step S11 carries the downlink data arrival indication information, initiating the random access and/or receiving the changed system message in step S12 includes:
determining whether the first non-anchor carrier is configured with a corresponding random access resource;
when the first non-anchor carrier is configured with the corresponding random access resource, initiating random access from the first non-anchor carrier; and
when the first non-anchor carrier is not configured with the random access resource, jumping to other non-anchor carrier the anchor carrier and initiating random access .

That is, when the paging message is triggered by the arrival of the downlink data, the user equipment may receive the paging message on the non-anchor carrier, and initiate random access according to the access resource configuration, and then receive the corresponding downlink data.

Optionally, if the first non-anchor carrier is not configured with the random access resource, jumping to the other non-anchor carrier or initiating random access from the anchor carrier may include:
when the other non-anchor carrier than the first non-anchor carrier is configured with the random access resource, jumping to one of the non-anchor carriers configured with the random access resource and initiating random access ; and
when the other non-anchor carrier than the first non-anchor carrier is not configured with the random access resource, jumping to the anchor carrier and initiating random access from the anchor carrier.

For example, in one embodiment of the present disclosure, the multi-carrier cell includes one anchor carrier and five non-anchor carriers, wherein the third non-anchor carrier is configured with random access resource. When the user equipment receives the paging message on the first non-anchor carrier, and finds that the paging message carries the downlink data arrival indication information, it may jump from the first non-anchor carrier to the third non-anchor carrier to initiate random access to receive corresponding downlink data.

Optionally, in another embodiment of the present disclosure, the paging message received by the user equipment may further carry system message change indication information; the system change indication information indicating that the system message is about to be changed.

Based on this, in step S12, initiating random access, and/or receiving the changed system message according to the paging message may include:
jumping from the first non-anchor carrier to the anchor carrier according to the system message change indication information; and
receiving the changed system message on the anchor carrier.

Since the system message can only be transmitted and received through the control channel in the anchor carrier, when the user equipment is on the non-anchor carrier, if the system message has to be received, first, it has to jump to the anchor carrier according to the system message change indication information carried in the paging message, and then receive the corresponding system message on the anchor carrier.

It should be noted that, in the embodiment of the present disclosure, the user equipment is in a multi-carrier cell, which can receive the paging message from the base station using the anchor carrier, or receive the paging message from the base station using the non-anchor carrier. In order to fully utilize the frequency resources of the multi-carrier cell and also to balance the cell load, before receiving the paging message from the base station on the first non-anchor carrier of the multi-carrier cell, the anchor carrier or non-anchor carrier may be selected to receive the paging message from the base station according to the paging carrier selection policy.

Optionally, the paging carrier selection policy may be: in a plurality of paging cycles included in a period of time, the paging cycle sequence number is modulo N, and the paging cycles with the same result utilize the same paging carrier, where N is an integer greater than 1 and less than the paging cycle sequence number.

For example, in one HSFN period (i.e., 2.91 hours), the number of paging cycles of the UE is NT (the number of paging cycles may be the total number of starting superframes that can be used for paging in one HSFN period). Now let the NT paging cycles to be distributed on the Non Anchor carrier and the Anchor carrier respectively. The specific allocation method is, if the formula Ni mod N = 0 (where Ni = 1, 2, ..., NT, indicating the Ni-th cycle, and N may be specified as any value from 1 to NT) is selected, the Ni-th paging cycle that satisfies the formula is allocated on the Anchor carrier. The same configuration rules are used on both the UE side and the eNB side, so that both can be consistent in initiating paging and receiving paging.

In addition, in an embodiment of the present disclosure, the paging carrier selection policy may be performing time division multiplexing on the anchor carrier and each of the non-anchor carriers according to a time domain radio frame configured by the base station.

Specifically, the base station can separately configure a time domain radio frame corresponding to Non Anchor PRB for paging. For example, an interval method can be used. Assuming that the paging cycle is 640 ms once, if the interval is set to 1, it indicates that for an odd-numbered cycle the PRB for paging is on Non Anchor, and for an even-numbered cycle the PRB for paging is on Anchor. If the interval is set to 0, it indicates that UE is always on Non Anchor. The UE first selects a corresponding Non Anchor carrier according to the selection policy of the paging carrier, and then the UE completes paging monitoring on the corresponding carrier at the respective time domain resource location, according to the time domain resource location corresponding to the PRB configured for paging by the base station.

Optionally, the paging carrier selection policy includes: selecting a paging carrier based on a mapping relationship between a coverage enhancement level and a paging carrier configured by the base station. Specifically, in an embodiment of the present disclosure, the base station may broadcast, to each user equipment, some configuration messages, and the configuration messages may include a mapping relationship between a coverage enhancement level (CE level) of the user equipment and a paging carrier. Then, the user equipment may select the corresponding paging carrier according to its current coverage enhancement level. Optionally, the coverage enhancement level of the user equipment may be, for example, excellent, good, medium, or poor. In the corresponding relationship between the coverage enhancement level and the paging carrier, one CE level may correspond to multiple paging carriers, or one CE level may correspond to one paging carrier, or one paging carrier may correspond to multiple CE levels, which is not limited by the embodiments of the present disclosure.

Optionally, in a case where a CE level corresponds to multiple paging carriers, the user equipment may use a paging carrier selection algorithm to select an appropriate carrier, or determine an optional range of a paging carrier. In case where one CE level correspond to one paging, the user equipment can directly select the carrier corresponding to the CE level. Moreover, when paging carrier selection is performed according to the mapping relationship, each carrier may send a paging message according to the number of repetitions corresponding to its CE level.

Optionally, since the location of the user equipment may change, the signal coverage may be different. After the CE level changes, the user equipment may continue to listen to the paging message on the carrier, and search for the location for listening the paging message according to the latest CE level. In this case, since the base station cannot know the information about the change of the CE level of the user in time, the paging may fail at this time. The base station will increase the level according to the original CE level and page the UE according to the number of repetitions corresponding to the enhanced CE level. Optionally, the user equipment may also switch to the paging carrier corresponding to the changed CE level according to the change of the CE level. In this case, after the paging fails at this time, the base station may select to send a paging message in the next paging cycle on the carrier corresponding to the CE level resulted by increasing or decreasing the previous CE level by one level.

Optionally, when the UE (user equipment) is in the RRC idle state, the UE may camp on the anchor carrier or the non-anchor carrier of the multi-carrier cell. When camping on the non-anchor carrier, the UE may acquire an intra-frequency cell list and an inter-frequency cell list based on the non-anchor carrier frequency point to perform intra-frequency measurement, inter-frequency measurement for cell reselection on the non-anchor carrier.

Optionally, in an embodiment of the present disclosure, a method for acquiring an intra-frequency cell list and an inter-frequency cell list based on the non-anchor carrier frequency point may include:
receiving a first system message, the first system message including an intra-frequency cell list and an inter-frequency cell list based on the anchor carrier frequency point; and
converting the intra-frequency cell list and the inter-frequency cell list based on the anchor carrier frequency point into an intra-frequency cell list and an inter-frequency cell list based on the non-anchor carrier frequency point.

That is, when the UE camps on the non-anchor carrier, the paging message may be received, and the paging message carries the system message change indication information. The UE may jump to the anchor carrier according to the system message change indication information, to receive the first system message on the anchor carrier. Included in the first system message is an intra-frequency cell list and an inter-frequency cell list based on the anchor carrier frequency point. In order to determine whether each cell in the cell list with respect to each non-anchor carrier is an intra-frequency or an inter-frequency, the intra-frequency cell list and the inter-frequency cell list based on the anchor carrier frequency point have to be converted into an intra-frequency cell list and an inter-frequency cell list based on the non-anchor carrier frequency point.

Optionally, in another embodiment of the present disclosure, a method for obtaining an intra-frequency cell list and an inter-frequency cell list based on the non-anchor carrier frequency point may include receiving a second system message, and the second system message includes intra-frequency cell lists and inter-frequency cell lists with respect to the anchor carrier frequency point and all non-anchor carrier frequency points. That is to say, in the second system message, the base station directly lists the intra-frequency cell and the inter-frequency cell corresponding to each non-anchor carrier, respectively, thereby reducing the calculation amount of the UE.

The paging method provided by the present disclosure will be described in detail below through specific embodiments in conjunction with the accompanying drawings.

In the LTE system, when data is to be sent to a UE in an idle state (i.e., the RRC state is RRC-IDLE), the MME (Mobility Management Entity) has to send a paging message to all eNodeBs in the Tracking Area (TA) in which the UE is registered, and the eNodeB sends a paging message to notify the UE, as shown in FIG. 2. The UE listens to the paging message at the corresponding location according to the calculation formula of the paging occasion (PO). When the UE receives the paging message, it will initiate an RRC connection request to receive the downlink data. After transmitting the paging message, and MME determines whether the current paging is successfully received by the UE according to whether the UE performs the corresponding action subsequently. If the paging message is not successfully received by the UE, the MME will continue to page the user in the next paging cycle.

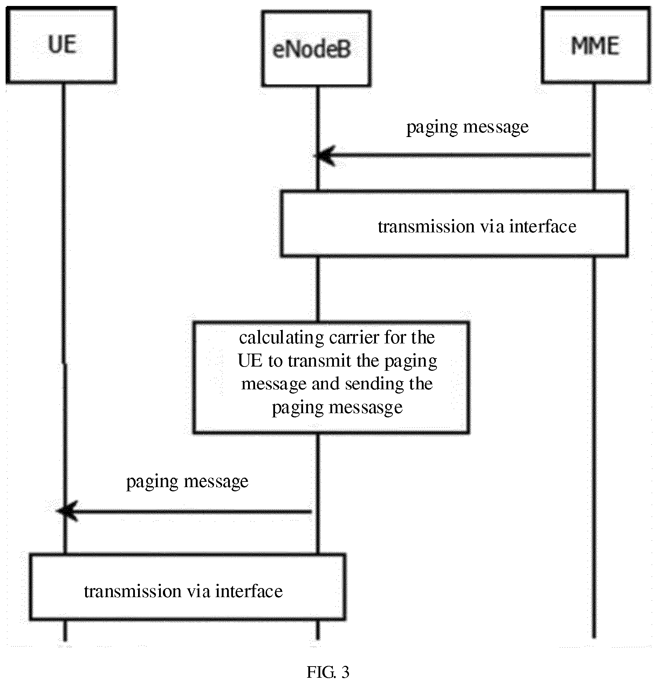

FIG. 3 is a flowchart of a multi-carrier paging transmission process provided by the present disclosure. As shown in FIG. 3, after the eNodeB receives the paging message sent by the MME, the eNodeB interprets the content thereof to obtain UE-ID information. According to the paging carrier carried by the paging message of the UE, a paging message is sent on the corresponding paging carrier. At the same time, the UE will listen to the paging message on the paging carrier carried by the paging message. For a UE with an enhanced CE level, the eNodeB repeatedly sends a paging message on the paging carrier during a paging cycle.

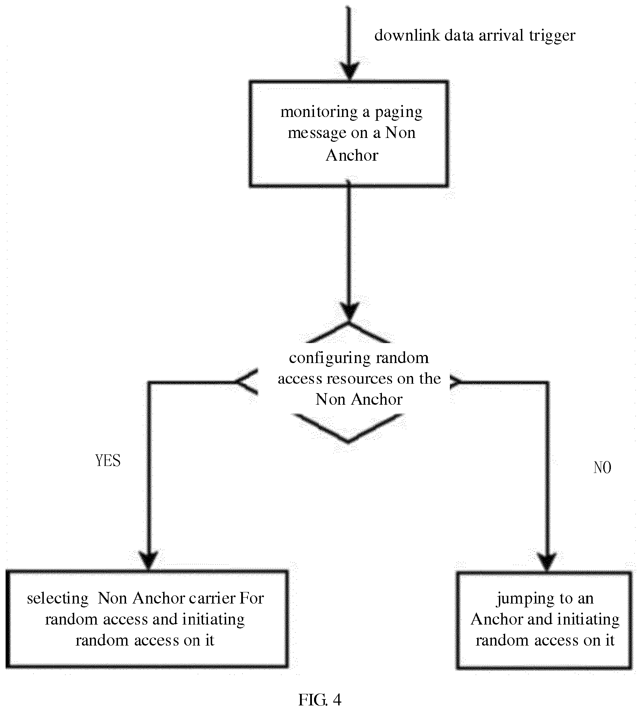

FIG. 4 shows the behavior decision of the UE after the paging monitoring is performed on the Non Anchor carrier and the related paging message is received for the UE that has selected the Non Anchor carrier with the paging selection policy. As shown in FIG. 4, if the paging message monitored by the UE is triggered by the arrival of the downlink data, the UE will initiate random access on the Non Anchor carrier or jump to the Anchor carrier to initiate random access, which may be specifically determined by configuration of the random access resources. If the Non Anchor carrier is configured with resources for transmitting a random access preamble sequence, the UE selects the Non Anchor carrier and initiates random access thereon, that is, selects the corresponding Non Anchor carrier according to the configuration of the PRACH carrier and the PRACH carrier selection policy and initiate random access . If the Non Anchor carrier is not configured with the resource for transmitting the random access preamble sequence, and only the Anchor carrier is configured with the resource for transmitting the random access preamble sequence, the UE will jump to the Anchor carrier and initiate random access.

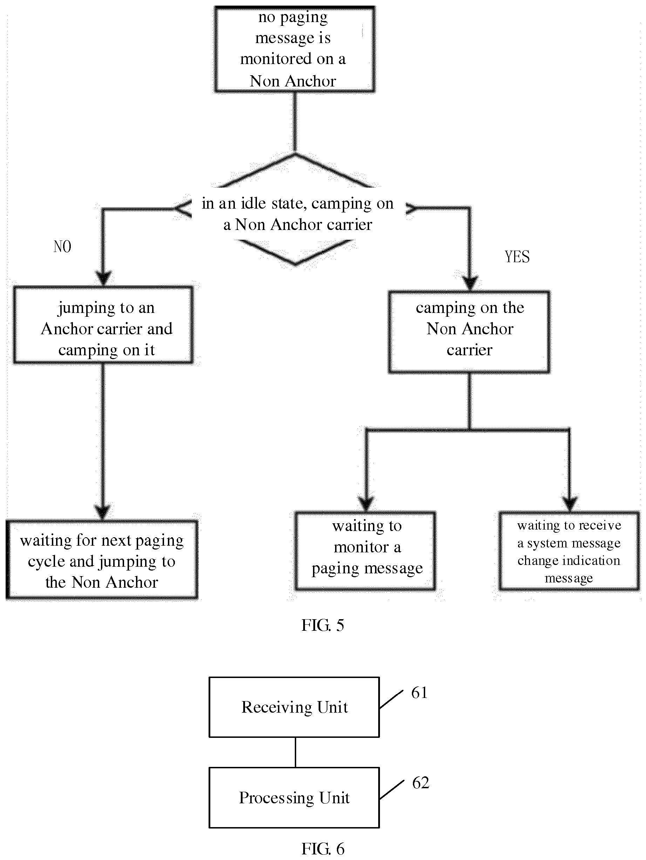

FIG. 5 shows the behavior decision of the UE after the paging monitoring is performed on the Non Anchor carrier and the related paging message is not received for the UE that has selected the Non Anchor carrier with the paging selection policy. As shown in FIG. 5, after the UE performs the paging monitoring on the Non Anchor carrier, when the relevant paging message is not received, preferably, the UE will continue to stay on the Non Anchor carrier until the change indication information of the system message carried in the paging message is received, so as to jump to the Anchor carrier to receive the paging message, or until the downlink data arrival information carried in the paging message is monitored, and then select to initiate random access between the Anchor carrier and the Non Anchor carrier. That is to say, the UE in the idle state camps on the Non Anchor carrier, which can reduce the number of handovers between the Anchor carrier and the Non Anchor carrier, and reduce the power consumption caused by the inter-carrier handover. The UE may also jump to camp on the Anchor carrier, that is, the UE in the idle state may camp on the Anchor carrier.

For the UE that is idle on the Anchor carrier, when the UE has to receive the paging message, the UE may select the paging carrier according to the selection method of the paging carrier to perform monitoring and receiving of the paging message. According to the carrier selection method, a certain Non Anchor carrier may be selected. In this case, the UE has to jump to the Non Anchor carrier to listen to the paging message. It is also possible to select the resident Anchor carrier according to the carrier selection method and then directly listen to the paging message on the carrier. The definition of the paging carrier list in the paging carrier selection method may only contain the Non Anchor carrier list or may contain not only the Non Anchor carrier list but also the Anchor carrier.

Correspondingly, as shown in FIG. 6, an embodiment of the present disclosure further provides a paging apparatus, including the following components.

A receiving unit 61 is configured to receive a paging message from a base station on a first non-anchor carrier of a multi-carrier cell, the paging message carrying downstream data arrival indication information and/or system message change indication information.

A processing unit 62 is configured to initiate random access, and/or receive the changed system message according to the paging message received by the receiving unit.

The multi-carrier cell includes an anchor carrier and a plurality of non-anchor carriers.

In the paging apparatus provided by the embodiment of the present disclosure, the receiving unit 61 receives a paging message from a base station on a first non-anchor carrier of a multi-carrier cell, and the processing unit 62, according to downlink data arrival indication information and/or system message change indication information carried in the paging message, initiates a random access and/or receive a changed system message according to the paging message. In this way, when the user equipment is paged by the base station, the non-anchor carrier resources in the multi-carrier cell can be fully utilized to receive the paging message, which can greatly expand the paging capacity and make the paging load more balanced.

Optionally, the paging message received by the receiving unit 61 carries the downlink data arrival indication information.

The processing unit 62 can include:
a determining module, configured to determine whether the first non-anchor carrier is configured with a corresponding random access resource;
a first access module, configured to, when the determining module determines that the first non-anchor carrier is configured with the corresponding random access resource, initiate random access from the first non-anchor carrier; and
a second access module, configured to: when the determining module determines that the first non-anchor carrier is not configured with the random access resource, jump to other non-anchor carrier or the anchor carrier and initiate random access .

Optionally, the second access module is configured to:
when the other non-anchor carrier than the first non-anchor carrier is configured with the random access resource, jump to one of the non-anchor carriers configured with the random access resource and initiating random access ; and
when the other non-anchor carrier than the first non-anchor carrier is not configured with the random access resource, jump to the anchor carrier and initiate random access from the anchor carrier.

Optionally, the paging message received by the receiving unit 61 carries the system message change indication information.

The processing unit 62 may include:
a jumping module configured to jump from the first non-anchor carrier to the anchor carrier according to the system message change indication information; and
a system message receiving module configured to receive a changed system message on the anchor carrier.

Optionally, the paging apparatus provided by the embodiment of the present disclosure may further include: a selecting unit configured to, before receiving the paging message from the base station on the first non-anchor carrier of the multi-carrier cell, select the anchor carrier or non-anchor carrier to receive the paging message from the base station according to the paging carrier selection policy.

Optionally, the paging carrier selection policy may include: in a plurality of paging cycles included in a period of time, the paging cycle sequence number is modulo N, and the paging cycles with the same result utilize the same paging carrier, where N is an integer greater than 1 and less than the paging cycle sequence number.

Optionally, the paging carrier selection policy may further include performing time division multiplexing on the anchor carrier and each of the non-anchor carriers according to a time domain radio frame configured by the base station.

Optionally, the paging carrier selection policy includes: selecting a paging carrier based on a mapping relationship between a coverage enhancement level and a paging carrier configured by the base station. Specifically, in an embodiment of the present disclosure, the base station may broadcast, to each user equipment, some configuration message, and the configuration message may include a mapping relationship between a coverage enhancement level (CE level) of the user equipment and a paging carrier. Then, the user equipment may select the corresponding paging carrier according to its current coverage enhancement level. Optionally, the coverage enhancement level of the user equipment may be, for example, excellent, good, medium, or poor. In the corresponding relationship between the coverage enhancement level and the paging carrier, one CE level may correspond to multiple paging carriers, or one CE level may correspond to one paging carrier, or one paging carrier may correspond to multiple CE levels, which is not limited by the embodiments of the present disclosure.

Optionally, in a case where a CE level corresponds to multiple paging carriers, the user equipment may use a paging carrier selection algorithm to select an appropriate carrier, or determine an optional range of a paging carrier. In case where one CE level correspond to one paging, the user equipment can directly select the carrier corresponding to the CE level. Moreover, when paging carrier selection is performed according to the mapping relationship, each carrier may send a paging message according to the number of repetitions corresponding to its CE level.

Optionally, since the location of the user equipment may change, the signal coverage may be different. After the CE level changes, the user equipment may continue to listen to the paging message on the carrier, and search for the location for listening the paging message according to the latest CE level. In this case, since the base station cannot know the information about the change of the CE level of the user in time, the paging may fail at this time. The base station will increase the level according to the original CE level and page the UE according to the number of repetitions corresponding to the enhanced CE level. Optionally, the user equipment may also switch to the paging carrier corresponding to the changed CE level according to the change of the CE level. In this case, after the paging fails at a certain time, the base station may select to send a paging message in the next paging cycle on the carrier corresponding to the CE level resulted by increasing or decreasing the previous CE level by one level.

Optionally, the paging apparatus provided by the embodiment of the present disclosure may further include: a camping unit configured to camp on an anchor carrier or a non-anchor carrier of the multi-carrier cell when in a radio resource control RRC idle state.

Optionally, the paging apparatus provided by the embodiment of the present disclosure may further include a list acquiring unit, configured to acquire an intra-frequency cell list and an inter-frequency cell list based on the non-anchor carrier frequency point to perform intra-frequency measurement, inter-frequency measurement for cell reselection on the non-anchor carrier.

Optionally, the list acquiring unit may include: a first receiving module, configured to receive a first system message, the first system message including an intra-frequency cell list and an inter-frequency cell list based on the anchor carrier frequency point; and a converting module configured to convert the intra-frequency cell list and the inter-frequency cell list based on the anchor carrier frequency point into an intra-frequency cell list and an inter-frequency cell list based on the non-anchor carrier frequency point.

Optionally, the list acquiring unit may further include: a second receiving module, configured to receive a second system message, and the second system message includes intra-frequency cell lists and inter-frequency cell lists with respect to the anchor carrier frequency point and all non-anchor carrier frequency points.

Correspondingly, an embodiment of the present disclosure further provides user equipment, including any paging apparatus provided by the foregoing embodiments, and thus can achieve corresponding technical effects. The foregoing has been described in detail, and details are not repeated herein.

Correspondingly, the present disclosure further provides a paging system, including a mobility management entity, a base station, and any user equipment provided by an embodiment of the present disclosure, and thus can achieve corresponding technical effects. The foregoing has been described in detail, and details are not repeated herein.

It is to be understood that the terms "including", "comprising", or any other variants thereof, are intended to encompass a non-exclusive inclusion, such that a process, method, article, or device comprising a series of elements includes not only those elements, but also other elements that are not explicitly listed, or elements that are inherent to such a process, method, article, or device. An element that is defined by the phrase "comprising a ..." does not exclude the presence of additional equivalent elements in the process, method, article, or device that comprises the element.

Through the description of the above embodiments, those skilled in the art can clearly understand that the foregoing embodiment method can be implemented by means of software in conjunction with a necessary general hardware platform, and however, can also be implemented by hardware, but in many cases, the former is better implementation. Based on such understanding, portions of the technical solution of the present disclosure that contribute substantially or to the related art may be embodied in the form of a software product stored in a storage medium (e.g., ROM/RAM, a disk, a CD), including a plurality of instructions for causing a terminal device (which may be a mobile phone, a computer, a server, an air conditioner, or a network disk, etc.) to perform the method described in various embodiments of the present disclosure.

### Industrial Applicability

As described above, a paging method and a paging apparatus provided by the embodiments of the present disclosure have the following beneficial effects. A paging message from a base station can be received on a first non-anchor carrier of a multi-carrier cell, and according to downstream data arrival indication information and/or system message change indication information carried in the paging message, a random access is initiated and/or a changed system message is received according to the paging message. In this way, when the user equipment is paged by the base station, the non-anchor carrier resources in the multi-carrier cell can be fully utilized to receive the paging message, which can greatly expand the paging capacity and make the paging load more balanced.

## Claims

1. A paging method, applied in a User Equipment, UE, comprising:
receiving (S11) a paging message from a base station on a first non-anchor carrier of a multi-carrier cell, wherein the paging message carries at least one of downlink data arrival indication information and system message change indication information; and
performing (S12) at least one of initiating a random access and receiving a changed system message according to the paging message;
wherein the multi-carrier cell comprises an anchor carrier and a plurality of non-anchor carriers;
wherein on condition that the paging message carries the downlink data arrival indication information, the performing at least one of the initiating the random access and receiving the changed system message according to the paging message comprises:
determining whether the first non-anchor carrier is configured with a corresponding random access resource;
when the first non-anchor carrier is configured with the corresponding random access resource, initiating random access from the first non-anchor carrier; and
when the first non-anchor carrier is not configured with the random access resource, jumping to other non-anchor carrier or the anchor carrier and initiating the random access;
wherein after the initiating the random access according to the paging message, the method further comprises: receiving, by the UE, corresponding downlink data.

2. The method according to claim 1, wherein when the first non-anchor carrier is not configured with the random access resource, jumping to other non-anchor carrier or the anchor carrier and initiating random access comprises:
when the other non-anchor carrier than the first non-anchor carrier is configured with the random access resource, jumping to one of the non-anchor carriers configured with the random access resource and initiating random access ; and
when the other non-anchor carrier than the first non-anchor carrier is not configured with the random access resource, jumping to the anchor carrier and initiating random access from the anchor carrier.

3. The method according to claim 1, wherein on condition that the paging message carries the system message change indication information,
the performing at least one of the initiating a random access or receiving a changed system message according to the paging message comprises:
jumping from the first non-anchor carrier to the anchor carrier according to the system message change indication information; and
receiving the changed system message on the anchor carrier.

4. The method according to claim 1, wherein before receiving the paging message from the base station on the first non-anchor carrier of the multi-carrier cell, the method further comprises:
selecting the anchor carrier or a non-anchor carrier to receive the paging message from the base station according to a paging carrier selection policy.

5. The method according to claim 4, wherein the paging carrier selection strategy comprises:
in a plurality of paging cycles contained in a period of time, performing modulo N arithmetic on the paging cycle sequence number, and the paging cycles with the same result utilizing the same paging carrier, where N is an integer greater than 1 and less than the paging cycle sequence number.

6. The method according to claim 4, wherein the paging carrier selection strategy comprises:
performing time division multiplexing on the anchor carrier and each of the non-anchor carriers according to a time domain radio frame configured by the base station.

7. The method according to claim 4, wherein the paging carrier selection policy comprises selecting a paging carrier based on a mapping relationship between a coverage enhancement level and a paging carrier configured by the base station.

8. The method according to any one of claims 1 to 7, further comprising:
when in an RRC idle state, camping on the anchor carrier or the non-anchor carrier of the multi-carrier cell.

9. The method according to claim 8, further comprising:
when camping on the non-anchor carrier, acquiring an intra-frequency cell list and an inter-frequency cell list based on a frequency point of the non-anchor carrier to perform intra-frequency measurement, or inter-frequency measurement for cell reselection on the non-anchor carrier.

10. The method according to claim 9, wherein the acquiring an intra-frequency cell list and an inter-frequency cell list based on a frequency point of the non-anchor carrier comprises:
receiving a first system message, the first system message comprising an intra-frequency cell list and an inter-frequency cell list based on the frequency point of the anchor carrier, and
converting the intra-frequency cell list and the inter-frequency cell list based on the frequency point of the anchor carrier into an intra-frequency cell list and an inter-frequency cell list based on a frequency point of the non-anchor carrier;
or
receiving a second system message, the second system message comprising intra-frequency cell lists and inter-frequency cell lists with respect to the frequency point of the anchor carrier and frequency points of all non-anchor carriers.

11. A paging apparatus, comprising:
a receiving unit (61) configured to receive a paging message from a base station on a first non-anchor carrier of a multi-carrier cell, wherein the paging message carries at least one of downlink data arrival indication information and system message change indication information; and
a processing unit (62) configured to perform at least one of initiating a random access and receiving a changed system message according to the paging message received by the receiving unit;
wherein the multi-carrier cell comprises an anchor carrier and a plurality of non-anchor carriers;
wherein the processing unit (62) comprises a determining module, a first access module and a second access module, wherein, on condition that the paging message received by the receiving unit carries the downlink data arrival indication information: the determining module is configured to determine whether the first non-anchor carrier is configured with a corresponding random access resource;
the first access module is configured to, when the determining module determines that the first non-anchor carrier is configured with the corresponding random access resource, initiate random access from the first non-anchor carrier; and
the second access module is configured to, when the determining module determines that the first non-anchor carrier is not configured with the random access resource, jump to other non-anchor carrier or the anchor carrier and initiate random access;
wherein the processing unit (62) is further configured to receive corresponding downlink data after the random access initiated according to the paging message.

12. The apparatus according to claim 11, wherein the second access module is configured to:
when the other non-anchor carrier than the first non-anchor carrier is configured with the random access resource, jump to one of the non-anchor carriers configured with the random access resource and initiate random access ; and
when the other non-anchor carrier than the first non-anchor carrier is not configured with the random access resource, jump to the anchor carrier and initiate random access from the anchor carrier.

13. User equipment comprising the paging apparatus of any one of claims 11 to 12.

## Patentansprüche

1. Paging-Verfahren, das in einem User Equipment, UE, angewandt wird, umfassend:
Empfangen (S11) einer Paging-Nachricht von einer Basisstation auf einem ersten Nicht-Ankerträger einer Mehrträgerzelle, wobei die Paging-Nachricht mindestens eines von Downlink-Datenankunftsangabeinformationen und Systemnachricht-Änderungsangabeinformationen trägt; und
Durchführen (S12) von mindestens einem von Einleiten eines Direktzugriffs und Empfangen einer geänderten Systemnachricht gemäß der Paging-Nachricht;
wobei die Mehrträgerzelle einen Ankerträger und eine Vielzahl von Nicht-Ankerträgern umfasst;
wobei
unter der Bedingung, dass die Paging-Nachricht die Downlink-Datenankunftsangabeinformationen trägt, das Durchführen von mindestens einem von dem Einleiten des Direktzugriffs und Empfangen der geänderten Systemnachricht gemäß der Paging-Nachricht umfasst:
Bestimmen, ob der erste Ankerträger mit einer entsprechenden Direktzugriffsressource konfiguriert ist;
wenn der erste Nicht-Ankerträger mit der entsprechenden Direktzugriffsressource konfiguriert ist, Einleiten von Direktzugriff von dem ersten Nicht-Ankerträger; und
wenn der erste Nicht-Ankerträger nicht mit der Direktzugriffsressource konfiguriert ist, Springen zu einem anderen Nicht-Ankerträger oder dem Ankerträger und Einleiten des Direktzugriffs;
wobei das Verfahren nach dem Einleiten des Direktzugriffs gemäß der Paging-Nachricht weiter umfasst: Empfangen entsprechender Downlink-Daten durch das UE.

2. Verfahren nach Anspruch 1, wobei, wenn der erste Nicht-Ankerträger nicht mit der Direktzugriffsressource konfiguriert ist, das Springen zu einem anderen Nicht-Ankerträger oder dem Ankerträger und das Einleiten des Direktzugriffs umfasst:
wenn der andere Nicht-Ankerträger als der erste Nicht-Ankerträger mit der Direktzugriffsressource konfiguriert ist, Springen zu einem der Nicht-Ankerträger, die mit der Direktzugriffsressource konfiguriert sind, und Einleiten von Direktzugriff;
und
wenn der andere Nicht-Ankerträger als der erste Nicht-Ankerträger nicht mit der Direktzugriffsressource konfiguriert ist, Springen zu dem Ankerträger und Einleiten von Direktzugriff von dem Ankerträger.

3. Verfahren nach Anspruch 1, wobei unter der Bedingung, dass die Paging-Nachricht die Systemnachricht-Änderungsangabeinformationen trägt, das Durchführen mindestens eines von dem Einleiten eines Direktzugriffs oder Empfangen einer geänderten Systemnachricht gemäß der Paging-Nachricht umfasst:
Springen von dem ersten Nicht-Ankerträger zu dem Ankerträger gemäß den Systemnachricht-Änderungsangabeinformationen; und
Empfangen der geänderten Systemnachricht auf dem Ankerträger.

4. Verfahren nach Anspruch 1, wobei das Verfahren vor dem Empfangen der Paging-Nachricht von der Basisstation auf dem ersten Nicht-Ankerträger der Mehrträgerzelle weiter umfasst:
Auswählen des Ankerträgers oder eines Nicht-Ankerträgers zum Empfangen der Paging-Nachricht von der Basisstation gemäß einer Paging-Träger-Auswahlrichtlinie.

5. Verfahren nach Anspruch 4, wobei die Paging-Trägerauswahlstrategie umfasst:
in einer Vielzahl von Paging-Zyklen, die in einem Zeitraum enthalten sind, Durchführen von Modulo-N-Arithmetik auf der Paging-Zyklus-Sequenznummer, und den Paging-Zyklen mit dem gleichen Ergebnis, die den gleichen Paging-Träger nutzen, wobei N eine ganze Zahl größer als 1 und kleiner als die Paging-Zyklus-Sequenznummer ist.

6. Verfahren nach Anspruch 4, wobei die Paging-Trägerauswahlstrategie umfasst:
Durchführen von Zeitmultiplex auf dem Ankerträger und jedem der Nicht-Ankerträger gemäß einem durch die Basisstation konfigurierten Zeitbereich-Funkrahmen.

7. Verfahren nach Anspruch 4, wobei die Paging-Träger-Auswahlrichtlinie das Auswählen eines Paging-Trägers basierend auf einer Mapping-Beziehung zwischen einem Abdeckungsverbesserungsniveau und einem durch die Basisstation konfigurierten Paging-Träger umfasst.

8. Verfahren nach einem der Ansprüche 1 bis 7, weiter umfassend:
in einem ungenutzten RRC-Zustand, Verweilen auf dem Ankerträger oder dem Nicht-Ankerträger der Mehrträgerzelle.

9. Verfahren nach Anspruch 8, weiter umfassend:
beim Verweilen auf dem Nicht-Ankerträger, Erfassen einer Intrafrequenz-Zellliste und einer Interfrequenz-Zellliste basierend auf einem Frequenzpunkt des Nicht-Ankerträgers zum Durchführen von Intrafrequenzmessung oder Interfrequenzmessung zur Zellneuauswahl auf dem Nicht-Ankerträger.

10. Verfahren nach Anspruch 9, wobei das Erfassen einer Intrafrequenz-Zellliste und einer Interfrequenz-Zellliste basierend auf einem Frequenzpunkt des Nicht-Ankerträgers umfasst:
Empfangen einer ersten Systemnachricht, wobei die erste Systemnachricht eine Intrafrequenz-Zellliste und eine Interfrequenz-Zellliste basierend auf dem Frequenzpunkt des Ankerträgers umfasst, und
Umwandeln der Intrafrequenz-Zellliste und der Interfrequenz-Zellliste basierend auf dem Frequenzpunkt des Ankerträgers in eine Intrafrequenz-Zellliste und eine Interfrequenz-Zellliste basierend auf einem Frequenzpunkt des Nicht-Ankerträgers;
oder
Empfangen einer zweiten Systemnachricht, wobei die zweite Systemnachricht Intrafrequenz-Zelllisten und Interfrequenz-Zelllisten in Bezug auf den Frequenzpunkt des Ankerträgers und Frequenzpunkte aller Nicht-Ankerträger umfasst.

11. Paging-Vorrichtung, umfassend:
eine Empfangseinheit (61), die zum Empfangen einer Paging-Nachricht von einer Basisstation auf einem ersten Nicht-Ankerträger einer Mehrträgerzelle konfiguriert ist, wobei die Paging-Nachricht mindestens eines von Downlink-Datenankunftsangabeinformationen und Systemnachricht-Änderungsangabeinformationen trägt; und
eine Verarbeitungseinheit (62), die zum Durchführen von mindestens einem vom Einleiten eines Direktzugriffs und Empfangen einer geänderten Systemnachricht gemäß der durch die Empfangseinheit empfangenen Paging-Nachricht konfiguriert ist;
wobei die Mehrträgerzelle einen Ankerträger und eine Vielzahl von Nicht-Ankerträgern umfasst;
wobei die Verarbeitungseinheit (62) ein Bestimmungsmodul, ein erstes Zugriffsmodul und ein zweites Zugriffsmodul umfasst, wobei
unter der Bedingung, dass die von der Empfangseinheit empfangene Paging-Nachricht die Downlink-Datenankunftsangabeinformationen trägt: das Bestimmungsmodul konfiguriert ist, um zu bestimmen, ob der erste Nicht-Ankerträger mit einer entsprechenden Direktzugriffsressource konfiguriert ist;
das erste Zugriffsmodul konfiguriert ist, um, wenn das Bestimmungsmodul bestimmt, dass der erste Nicht-Ankerträger mit der entsprechenden Direktzugriffsressource konfiguriert ist, Direktzugriff von dem ersten Nicht-Ankerträger einzuleiten; und
das zweite Zugriffsmodul konfiguriert ist, um, wenn das Bestimmungsmodul bestimmt, dass der erste Nicht-Ankerträger nicht mit der Direktzugriffsressource konfiguriert ist, zu dem anderen Nicht-Ankerträger oder dem Ankerträger zu springen und Direktzugriff einzuleiten;
wobei die Verarbeitungseinheit (62) weiter konfiguriert ist, um nach dem gemäß der Paging-Nachricht eingeleiteten Direktzugriff entsprechende Downlink-Daten zu empfangen.

12. Vorrichtung nach Anspruch 11, wobei das zweite Zugriffsmodul konfiguriert ist zum:
wenn der andere Nicht-Ankerträger als der erste Nicht-Ankerträger mit der Direktzugriffsressource konfiguriert ist, Springen zu einem der Nicht-Ankerträger, die mit der Direktzugriffsressource konfiguriert sind, und Einleiten von Direktzugriff;
und
wenn der andere Nicht-Ankerträger als der erste Nicht-Ankerträger nicht mit der Direktzugriffsressource konfiguriert ist, Springen zu dem Ankerträger und Einleiten von Direktzugriff von dem Ankerträger.

13. User Equipment, das die Paging-Vorrichtung nach einem der Ansprüche 11 bis 12 umfasst.

## Revendications

1. Procédé de radiomessagerie, appliqué dans un équipement utilisateur, UE, comprenant :
la réception (S11) d'un message de radiomessagerie à partir d'une station de base sur une première porteuse non d'ancrage d'une cellule à porteuses multiples,
dans lequel le message de radiomessagerie porte au moins l'une parmi une information d'indication d'arrivée de données de liaison descendante et une information d'indication de modification de message système ; et
la réalisation (S12) d'au moins l'une parmi l'initiation d'un accès aléatoire et la réception d'un message système modifié selon le message de radiomessagerie;
dans lequel la cellule à porteuses multiples comprend une porteuse d'ancrage et une pluralité de porteuses non d'ancrage ;
dans lequel
à condition que le message de radiomessagerie porte l'information d'indication d'arrivée de données de liaison descendante, la réalisation d'au moins l'une parmi l'initiation de l'accès aléatoire et la réception du message système modifié selon le message de radiomessagerie comprend :
la détermination de si la première porteuse non d'ancrage est configurée avec une ressource d'accès aléatoire correspondante ;
lorsque la première porteuse non d'ancrage est configurée avec la ressource d'accès aléatoire correspondante, l'initiation d'un accès aléatoire à partir de la première porteuse non d'ancrage ; et
lorsque la première porteuse non d'ancrage n'est pas configurée avec la ressource d'accès aléatoire, le saut vers une autre porteuse non d'ancrage ou la porteuse d'ancrage et l'initiation de l'accès aléatoire ;
dans lequel, après l'initiation de l'accès aléatoire selon le message de radiomessagerie, le procédé comprend en outre : la réception, par l'UE, de données de liaison descendante correspondantes.

2. Procédé selon la revendication 1, dans lequel lorsque la première porteuse non d'ancrage n'est pas configurée avec la ressource d'accès aléatoire, le saut vers une autre porteuse non d'ancrage ou la porteuse d'ancrage et l'initiation d'un accès aléatoire comprennent :
lorsque la porteuse non d'ancrage autre que la première porteuse non d'ancrage est configurée avec la ressource d'accès aléatoire, le saut vers l'une des porteuses non d'ancrage configurée avec la ressource d'accès aléatoire et l'initiation d'un accès aléatoire ; et
lorsque la porteuse non d'ancrage autre que la première porteuse non d'ancrage n'est pas configurée avec la ressource d'accès aléatoire, le saut vers la porteuse d'ancrage et l'initiation d'un accès aléatoire à partir de la porteuse d'ancrage.

3. Procédé selon la revendication 1, dans lequel à condition que le message de radiomessagerie porte l'information d'indication de modification de message système,
la réalisation d'au moins l'une parmi l'initiation d'un accès aléatoire ou la réception d'un message système modifié selon le message de radiomessagerie comprend :
le saut de la première porteuse non d'ancrage vers la porteuse d'ancrage selon l'information d'indication de modification de message système ; et
la réception du message système modifié sur la porteuse d'ancrage.

4. Procédé selon la revendication 1, dans lequel avant la réception du message de radiomessagerie à partir de la station de base sur la première porteuse non d'ancrage de la cellule à porteuses multiples, le procédé comprend en outre :
la sélection de la porteuse d'ancrage ou d'une porteuse non d'ancrage pour recevoir le message de radiomessagerie à partir de la station de base selon une politique de sélection de porteuse de radiomessagerie.

5. Procédé selon la revendication 4, dans lequel la stratégie de sélection de porteuse de radiomessagerie comprend :
dans une pluralité de cycles de radiomessagerie contenus dans une période temporelle, la réalisation d'un calcul arithmétique modulo N sur le numéro de séquence de cycle de radiomessagerie, et les cycles de radiomessagerie avec le même résultat utilisant la même porteuse de radiomessagerie, où N est un nombre entier supérieur à 1 et inférieur au numéro de séquence de cycle de radiomessagerie.

6. Procédé selon la revendication 4, dans lequel la stratégie de sélection de porteuse de radiomessagerie comprend :
la réalisation d'un multiplexage par répartition dans le temps sur la porteuse d'ancrage et chacune des porteuses non d'ancrage selon une trame radio dans le domaine temporel configurée par la station de base.

7. Procédé selon la revendication 4, dans lequel la politique de sélection de porteuse de radiomessagerie comprend la sélection d'une porteuse de radiomessagerie sur la base d'une relation de mise en correspondance entre un niveau d'amélioration de couverture et une porteuse de radiomessagerie configurée par la station de base.

8. Procédé selon l'une quelconque des revendications 1 à 7, comprenant en outre :
pendant un état de veille RRC, le fait de se trouver sur la porteuse d'ancrage ou la porteuse non d'ancrage de la cellule à porteuses multiples.

9. Procédé selon la revendication 8, comprenant en outre :
pendant que l'on se trouve sur la porteuse non d'ancrage, l'acquisition d'une liste de cellules intra-fréquence et d'une liste de cellules inter-fréquence basées sur un point de fréquence de la porteuse non d'ancrage pour réaliser une mesure intra-fréquence, ou une mesure inter-fréquence pour une resélection de cellule sur la porteuse non d'ancrage.

10. Procédé selon la revendication 9, dans lequel l'acquisition d'une liste de cellules intra-fréquence et d'une liste de cellules inter-fréquence basées sur un point de fréquence de la porteuse non d'ancrage comprend :
la réception d'un premier message système, le premier message système comprenant une liste de cellules intra-fréquence et une liste de cellules inter-fréquence basées sur le point de fréquence de la porteuse d'ancrage, et
la conversion de la liste de cellules intra-fréquence et la liste de cellules inter-fréquence basées sur le point de fréquence de la porteuse d'ancrage en une liste de cellules intra-fréquence et une liste de cellules inter-fréquence basées sur un point de fréquence de la porteuse non d'ancrage ;
ou
la réception d'un second message système, le second message système comprenant des listes de cellules intra-fréquence et des listes de cellules inter-fréquence par rapport au point de fréquence de la porteuse d'ancrage et aux points de fréquence de toutes les porteuses non d'ancrage.

11. Appareil de radiomessagerie, comprenant :
une unité de réception (61) configurée pour recevoir un message de radiomessagerie à partir d'une station de base sur une première porteuse non d'ancrage d'une cellule à porteuses multiples, dans lequel le message de radiomessagerie porte au moins l'une parmi une information d'indication d'arrivée de données de liaison descendante et une information d'indication de modification de message système ; et
une unité de traitement (62) configurée pour réaliser au moins l'une parmi l'initiation d'un accès aléatoire et la réception d'un message système modifié selon le message de radiomessagerie reçu par l'unité de réception ;
dans lequel la cellule à porteuses multiples comprend une porteuse d'ancrage et une pluralité de porteuses non d'ancrage ;
dans lequel l'unité de traitement (62) comprend un module de détermination, un premier module d'accès et un second module d'accès, dans lequel,
à condition que le message de radiomessagerie reçu par l'unité de réception porte l'information d'indication d'arrivée de données de liaison descendante : le module de détermination est configuré pour déterminer si la première porteuse non d'ancrage est configurée avec une ressource d'accès aléatoire correspondante ;
le premier module d'accès est configuré pour, lorsque le module de détermination détermine que la première porteuse non d'ancrage est configurée avec la ressource d'accès aléatoire correspondante, initier un accès aléatoire à partir de la première porteuse non d'ancrage ; et
le second module d'accès est configuré pour, lorsque le module de détermination détermine que la première porteuse non d'ancrage n'est pas configurée avec la ressource d'accès aléatoire, sauter vers une autre porteuse non d'ancrage ou la porteuse d'ancrage et initier un accès aléatoire ;
dans lequel l'unité de traitement (62) est en outre configurée pour recevoir des données de liaison descendante correspondantes après l'accès aléatoire initié selon le message de radiomessagerie.

12. Appareil selon la revendication 11, dans lequel le second module d'accès est configuré pour :
lorsque la porteuse non d'ancrage autre que la première porteuse non d'ancrage est configurée avec la ressource d'accès aléatoire, sauter vers l'une des porteuses non d'ancrage configurée avec la ressource d'accès aléatoire et initier un accès aléatoire ; et
lorsque la porteuse non d'ancrage autre que la première porteuse non d'ancrage n'est pas configurée avec la ressource d'accès aléatoire, sauter vers la porteuse d'ancrage et initier un accès aléatoire à partir de la porteuse d'ancrage.

13. Équipement utilisateur comprenant l'appareil de radiomessagerie selon l'une quelconque des revendications 11 à 12.
